# EUROPÄISCHE PATENTSCHRIFT

(11) **EP 0 526 720 B1**
(45) Veröffentlichungstag und Bekanntmachung des Hinweises auf die Patenterteilung: **12.04.1995**
(21) Anmeldenummer: 92110373.5
(22) Anmeldetag: 19.06.1992
(51) Int. Cl.: B64D 11/06

(54) **Sitzbankanordnung**
Seat-bench arrangement
Aménagement d'un banc

(30) Priorität: 06.08.1991 DE 4125958
(43) Veröffentlichungstag der Anmeldung: 10.02.1993
(73) Patentinhaber: Daimler-Benz Aerospace Airbus Gesellschaft mit beschränkter Haftung, 21129 Hamburg (DE)
(72) Erfinder: Müller, Hans-Jürgen, W-2359 Henstedt-Ulzburg (DE); Sprenger, Wilfried, W-2165 Issendorf (DE)
(74) Vertreter: Hansmann, Dierk, Dipl.-Ing.

(56) Entgegenhaltungen:
- EP-A- 0 170 116
- WO-A-88/01589
- US-A- 2 053 349

## Beschreibung

Die Erfindung betrifft eine Vorrichtung, die zur Ausbildung einer Sitzbankanordnung für Flugzeugkabinen mindestens einen Passagiersitz sowie einen Flugbegleitersitz aufweist.

Derartige Vorrichtungen werden für Passagierflugzeuge verwendet, um es dem Flugbegleitpersonal, insbesondere während Start- und Landephasen zu ermöglichen, sich derart hinzusetzen, daß eine Gefährdung vermieden wird. Die Flugbegleitersitze werden dabei derart angeordnet, daß sie in einem nichtbenutzten Zustand ein vergleichsweise kleines Volumen einnehmen.

Die bekannten Flugbegleitersitze sind nicht in einem erforderlichen Ausmaß dafür geeignet, in einfacher Weise und in vorgebbarer Orientierung mit den Passagiersitzen kombiniert zu werden.

Aufgabe der vorliegenden Erfindung ist es daher, eine Vorrichtung der einleitend genannten Art derart zu verbessern, Flugbegleitersitze und Passagiersitze in einfacher Weise zusammenzufügen.

Diese Aufgabe wird erfindungsgemäß dadurch gelöst, daß im Bereich des Flugbegleitersitzes mindestens ein Adapter angeordnet ist, der mit einer im Bereich des Passagiersitzes angeordneten Anschlußkupplung verbindbar ist und daß der Flugbegleitersitz im wesentlichen aus einem den Adapter tragenden Rahmen, einer mit dem Rahmen verbundenen Rückenlehne sowie einer relativ zur Rückenlehne verschwenkbar angeordneten Sitzfläche ausgebildet ist.

Durch die Anordnung des Adapters im Bereich des Flugbegleitersitzes ist es in einfacher Weise möglich, den Flugbegleitersitz mit dem Passagiersitz zu verbinden und eine Halterung des Flugbegleitersitzes mit Hilfe der im Bereich des Passagiersitzes angeordneten Anschlußkupplung vorzunehmen. Durch die Ausbildung des Flugbegleitersitzes aus der Rückenlehne und der verschwenkbar gegenüber der Rückenlehne angeordneten Sitzfläche ist es möglich, sowohl in einem unbenutzen Zustand ein geringes Volumen zu beanspruchen als auch die Zugängligkeit des Adapters und der Anschlußkupplung zur Vornahme einer Montage zu erhöhen.

Zur Durchführung einer gleichen Blickrichtung von Passagieren und Flugbegleitern wird vorgeschlagen, daß sowohl die Passagiersitze als auch der Flugbegleitersitz mit einer gleichen Ausrichtung versehen sind.

Alternativ wird eine Zuwendung des Flugbegleiters zu den Passagieren dadurch ermöglicht, daß die Passagiersitze und der Flugbegleitersitz in einander abgewandte Richtungen weisen.

Eine kostengünstige Fertigung durch Verwendung standardisierter Bauelemente wird dadurch ermöglicht, daß zwei Passagiersitze vorgesehen sind, die im Bereich einer gekürzten Dreiplatzsitzbank angeordnet sind.

Eine besonders flexible Fertigung und eine einfache Montage wird dadurch ermöglicht, daß der Flugbegleitersitz mit den Passagiersitzen modulartig verbunden ist.

Zur Gewährleistung einer ausreichenden Stabilität und zur Vermeidung von Beeinträchtigungen des optischen Erscheinungsbildes wird vorgeschlagen, daß der Adapter unterhalb einer von der Sitzfläche aufgespannten Ebene angeordnet ist.

Ferner ist für eine ausreichende Stabilität der Gesamtvorrichtung sowie zur Vermeidung von Beeinträchtigungen der Gestaltungsfreiheit vorgesehen, daß die Anschlußkupplung unterhalb einer von den Sitzflächen aufgespannten Ebene angeordnet ist.

Eine besonders hohe Stabilität bei einem geringen Bauvolumen wird dadurch gewährleistet, daß der Adapter mit einer im wesentlichen keilförmigen Ausbildung versehen ist und sich in Richtung auf die Anschlußkupplung erweitert. Durch diese keilförmige Ausbildung wird der jeweils tragende Querschnitt an eine lokal vorliegende Kräftebeaufschlagung angepaßt. Insbesondere ist es auch möglich, statt eines linear begrenzten Keiles eine entsprechend der Kraftbeaufschlagung geschwungen begrenzte Kontur vorzusehen.

Ferner ist für eine ausreichende Stabilität im Bereich der Passagiersitze vorgesehen, daß die Anschlußkupplung mit einer im wesentlichen keilförmigen Ausbildung versehen ist und sich in Richtung auf den Adapter erweitert.

Zur Durchführung einer zulassungsgemäßen Ausführungsform wird vorgeschlagen, daß in einem unterhalb der Sitzfläche angeordneten Bereich eine Freifläche vorgesehen ist, die als "Assist Space" nutzbar ist.

In der Zeichnung ist ein Ausführungsbeispiel der Erfindung schematisch dargestellt. Es zeigen:
Fig. 1 eine perspektivische Darstellung einer aus zwei Passagiersitzen und einem Flugbegleitersitz ausgebildeten Vorrichtung,
Fig. 2 eine andere perspektivische Darstellung der Vorrichtung gemäß Fig. 1 und
Fig. 3 eine perspektivische Darstellung einer aus zwei Passagiersitzen und einem Flugbegleitersitz ausgebildeten Vorrichtung, bei der die Passagiersitze und der Flugbegleitersitz in gleicher Richtung ausgerichtet sind und eine Sitzfläche des Flugbegleitersitzes hochgeklappt ist.

Die dargestellte Anordnung besteht aus zwei Passagiersitzen (1) sowie einem Flugbegleitersitz (2). Die Passagiersitze (1) sind im Bereich eines Rahmens (3) angeordnet und bestehen im wesentlichen aus Sitzflächen (4) sowie Rückenlehnen (5). Seitlich werden die Passagiersitze (1) von Armlehnen (6) begrenzt. Im Bereich einer Rückwand (7) der Passagiersitze (1) sind Ablagefächer (8) sowie Klapptische (9) angeordnet.

Der Flugbegleitersitz (2) besteht im wesentlichen aus einer Sitzfläche (10) sowie einer Rückenlehne (11). Die Sitzfläche (10) ist relativ zur Rükkenlehne (11) verschwenkbar gelagert. Die Sitzfläche (10) und die Rückenlehne (11) werden von einem Rahmen (12) gehaltert. Unterhalb einer von der Sitzfläche (10) aufgespannten Ebene ist ein Adapter (13) angeordnet, der mit einer Anschlußkupplung (14) verbunden ist, die unterhalb einer von den Sitzflächen (4) aufgespannten Ebene angeordnet ist. Insbesondere ist daran gedacht, sowohl den Adapter (13) als auch die Anschlußkupplung (14) mit einer im wesentlichen keilförmigen Ausbildung zu versehen und die keilförmigen Erweiterungen in die einander jeweils zugewandten Richtungen auszurichten.

Zur Verbesserung der Funktionalität ist vorgesehen, den Flugbegleitersitz (2) mit einer höheren Rückenlehne als die Passagiersitze (1) zu versehen. Zur Ermöglichung eines Anschnallens weist der Flugbegleitersitz (2) Sicherheitsgurte (15) auf. Die Passagiersitze (1) sind mit Sicherheitsgurten (16) versehen. Unterhalb der Sitzfläche (10) des Flugbegleitersitzes (2) ist eine beispielsweise als "Assist Space" nutzbare Freifläche (17) angeordnet.

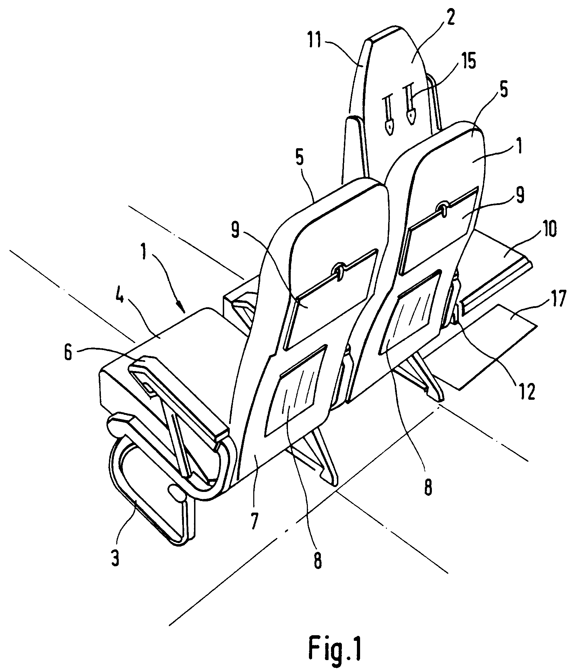

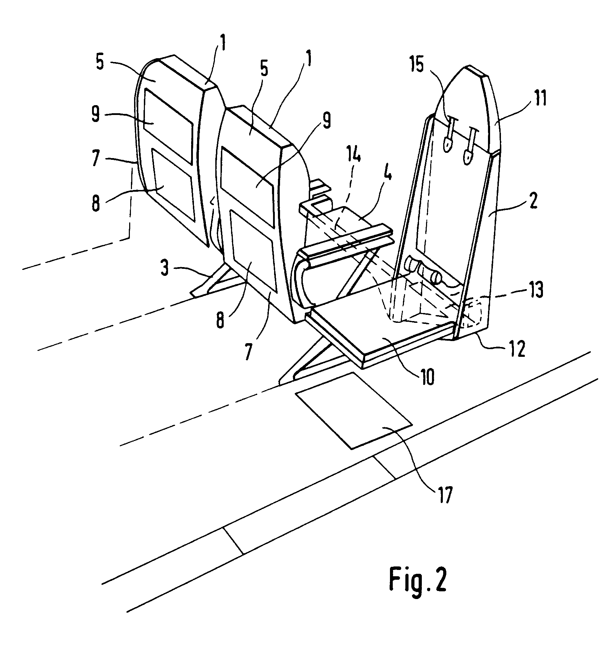

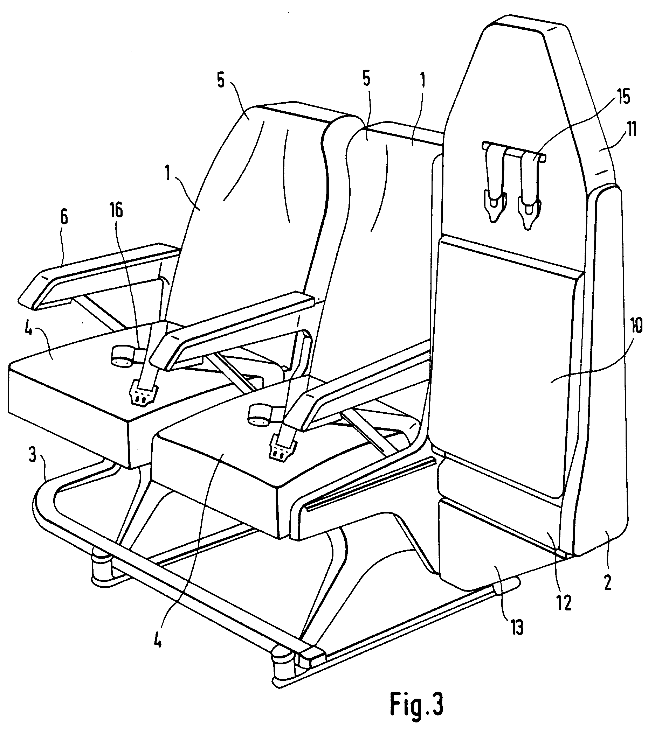

Bei der Ausführungsform gemäß Figur 1 und Figur 2 weisen der Flugbegleitersitz (2) und die Passagiersitze (1) in einander abgewandte Richtungen. Bei der Ausführungsform gemäß Figur 3 weisen der Flugbegleitersitz (2) und die Passagiersitze (1) in die gleiche Richtung. Bei einer modulartigen Verbindung des Flugbegleitersitzes (2) mit den Passagiersitzen (1) ist es möglich, den Flugbegleitersitz (2) in vorgebbarer Orientierung mit den Passagiersitzen (1) zu verbinden.

Insbesondere ist daran gedacht, die Passagiersitze (1) im Bereich einer entsprechend auf zwei Sitzplätze gekürzten Dreiplatzsitzbank anzuordnen. Bei einer modulartigen Ausführung können im Bereich des Flugbegleitersitzes (2) jeweils gleiche Bauteile zur Ausbildung des Adapters (13) und im Bereich der Passagiersitze (1) entsprechend angepaßte Anschlußkupplungen (14) vorgesehen werden.

Die aus den Passagiersitzen (1) und dem Flugbegleitersitz (2) ausgebildete Vorrichtung ist insbesondere auch dafür geeignet, im Bereich von Türen einer die Vorrichtung aufnehmenden Flugzeugkabine angeordnet zu werden. Bei einer hochgeklappten Sitzfläche (10) ergibt sich eine wesentliche Verbesserung der Zugänglichkeit, die eine Erweiterung des nutzbaren Raumes zur Folge hat.

## Patentansprüche

1. Vorrichtung, die zur Ausbildung einer Sitzbankanordnung für Flugzeugkabinen mindestens einen Passagiersitz (1) sowie einen Flugbegleitersitz (2) aufweist, dadurch gekennzeichnet, daß im Bereich des Flugbegleitersitzes (2) mindestens ein Adapter (13) angeordnet ist, der mit einer im Bereich des Passagiersitzes (1) angeordneten Anschlußkupplung (14) verbindbar ist und daß der Flugbegleitersitz (2) im wesentlichen aus einem den Adapter (13) tragenden Rahmen (12), einer mit dem Rahmen (12) verbundenen Rückenlehne (11) sowie einer relativ zur Rückenlehne (11) verschwenkbar angeordneten Sitzfläche (10) ausgebildet ist.

2. Vorrichtung nach Anspruch 1, dadurch gekennzeichnet, daß sowohl die Passagiersitze (1) als auch der Flugbegleitersitz (2) mit einer gleichen Ausrichtung versehen sind.

3. Vorrichtung nach Anspruch 1, dadurch gekennzeichnet, daß die Passagiersitze (1) und der Flugbegleitersitz (2) in einander abgewandte Richtungen weisen.

4. Vorrichtung nach einem der Ansprüche 1 bis 3, dadurch gekennzeichnet, daß zwei Passagiersitze (1) vorgesehen sind, die im Bereich einer gekürzten Dreiplatzsitzbank angeordnet sind.

5. Vorrichtung nach einem der Ansprüche 1 bis 4, dadurch gekennzeichnet, daß der Flugbegleitersitz (2) mit den Passagiersitzen (1) modulartig verbunden ist.

6. Vorrichtung nach einem der Ansprüche 1 bis 5, dadurch gekennzeichnet, daß der Adapter (11) unterhalb einer von der Sitzfläche (10) aufgespannten Ebene angeordnet ist.

7. Vorrichtung nach einem der Ansprüche 1 bis 6, dadurch gekennzeichnet, daß die Anschlußkupplung (14) unterhalb einer von den Sitzflächen (4) aufgespannten Ebene angeordnet ist.

8. Vorrichtung nach einem der Ansprüche 1 bis 7, dadurch gekennzeichnet, daß der Adapter (13) mit einer im wesentlichen keilförmigen Ausbildung versehen ist und sich in Richtung auf die Anschlußkupplung (14) erweitert.

9. Vorrichtung nach einem der Ansprüche 1 bis 8, dadurch gekennzeichnet, daß die Anschlußkupplung (14) mit einer im wesentlichen keilförmigen Ausbildung versehen ist und sich in Richtung auf den Adapter (13) erweitert.

10. Vorrichtung nach einem der Ansprüche 1 bis 9, dadurch gekennzeichnet, daß in einem unterhalb der Sitzfläche (10) angeordneten Bereich eine Freifläche (17) vorgesehen ist, die als "Assist Space" nutzbar ist.

## Claims

1. Apparatus comprising at least one passenger seat (1) and one steward's seat (2) to form a bench arrangement for aircraft cabins, characterised in that at least one fitting piece (13) is arranged in the region of the steward's seat (2) and can be joined to a connecting coupling (14) arranged in the region of the passenger seat (1), and that the steward's seat (2) is formed substantially by a frame (12) carrying the fitting piece (13), a backrest (11) joined to the frame (12) and a seat surface (10) arranged for swivelling movement relative to the backrest (11 ).

2. Apparatus according to claim 1, characterised in that both the passenger seats (1) and the steward's seat (2) have an identical alignment.

3. Apparatus according to claim 1, characterised in that the passenger seats (1) and steward's seat (2) face away from each other.

4. Apparatus according to any of claims 1 to 3, characterised in that two passenger seats (1) are provided and are arranged in the region of a shortened three-seat bench.

5. Apparatus according to any of claims 1 to 4, characterised in that the steward's seat (2) is joined to the passenger seats (1) in a modular system.

6. Apparatus according to any of claims 1 to 5, characterised in that the fitting piece (11) is arranged below a plane extending from the seat surface (10).

7. Apparatus according to any of claims 1 to 6, characterised in that the connecting coupling (14) is arranged below a plane extending from the seat surfaces (4).

8. Apparatus according to any of claims 1 to 7, characterised in that the fitting piece (13) is provided with a substantially wedge-shaped structure and is extended towards the connecting coupling (14).

9. Apparatus according to any of claims 1 to 8, characterised in that the connecting coupling (14) is provided with a substantially wedge-shaped structure and is extended towards the fitting piece (13).

10. Apparatus according to any of claims 1 to 9, characterised in that a free area (17) is provided in a region below the seat surface (10) and may be used as an "assistance space".

## Revendications

1. Dispositif composé d'au moins un siège (1) de passager et d'un siège (2) d'accompagnateur pour former un équipement de siège de cabine d'avion, caractérisé en ce qu'au niveau du siège d'accompagnateur (2) il est prévu au moins un adaptateur (13) qui peut être relié à un élément de raccordement (14) prévu au niveau du siège de passager (1) et le siège d'accompagnateur (2) est formé essentiellement d'un châssis (12) portant l'adaptateur (13), d'un dossier (11) relié au châssis (12) ainsi que d'une assise (10) pivotante par rapport au dossier (11).

2. Dispositif selon la revendication 1, caractérisé en ce qu'à la fois les sièges de passager (1) et le siège d'accompagnateur (2) sont tournés dans la même direction.

3. Dispositif selon la revendication 1, caractérisé en ce que les sièges de passager (1) et le siège d'accompagnateur (2) sont tournés dans des directions opposées.

4. Dispositif selon l'une des revendications 1 à 3, caractérisé par deux sièges de passager (1) prévus au niveau d'un banc à trois places raccourci.

5. Dispositif selon l'une des revendications 1 à 4, caractérisé en ce que le siège d'accompagnateur (2) est relié de manière modulaire aux sièges de passager (1).

6. Dispositif selon l'une des revendications 1 à 5, caractérisé en ce que l'adaptateur (13) se trouve en dessous d'un plan passant par les assises (10).

7. Dispositif selon l'une des revendications 1 à 6, caractérisé en ce que l'élément de raccordement (14) est prévu en dessous d'un plan passant par les assises (4).

8. Dispositif selon l'une des revendications 1 à 7, caractérisé en ce que l'adaptateur (13) présente une forme essentiellement en coin et va en s'étendant en direction de l'élément de raccordement (14).

9. Dispositif selon l'une des revendications 1 à 8, caractérisé en ce que l'élément de raccordement (14) a une forme essentiellement en coin et va en s'élargissant en direction de l'adaptateur (13).

10. Dispositif selon l'une des revendications 1 à 9, caractérisé par une surface libre (17) prévue dans une zone en dessous de la surface d'assise (10) et qui est utilisable comme « Assist Space ».
